# EUROPÄISCHE PATENTSCHRIFT

(11) **EP 1 048 809 B1**
(45) Veröffentlichungstag und Bekanntmachung des Hinweises auf die Patenterteilung: **18.02.2004**
(21) Anmeldenummer: 00108583.6
(22) Anmeldetag: 20.04.2000
(51) Int. Cl.: E05D 11/10

(54) **Scharnier mit einem Scharnierarm**
Hinge with a hinge arm
Charnière avec un bras de charnière

(30) Priorität: 28.04.1999 AT 75299
(43) Veröffentlichungstag der Anmeldung: 02.11.2000
(73) Patentinhaber: Julius Blum Gesellschaft m.b.H., 6973 Höchst (AT)
(72) Erfinder: Lenz, Günter, 6973 Höchst (AT)
(74) Vertreter: Torggler, Paul Norbert, Dr.

(56) Entgegenhaltungen:
- DE-A- 2 408 057
- DE-A- 3 616 028
- FR-A- 2 324 844
- GB-A- 1 185 318

## Beschreibung

Die Erfindung bezieht sich auf ein Scharnier mit einem Schamierarm der mittels eines äußeren und eines inneren Gelenkhebels mit einem Scharniertopf verbunden ist, indem jeder Gelenkhebel auf einer Gelenkachse des Schamierarmes und einer Gelenkachse des Schamiertopfes gelagert ist und die beiden Gelenkhebel und die vier Gelenkachsen ein Gelenkviereck bilden und auf der schamierarmseitigen Gelenkachse des äußeren Gelenkhebels eine U-förmige Blattbiegefeder lagert, die mit einem Schenkel auf einen Steuerteil des inneren Gelenkhebels drückt.

Ein derartiges Scharnier ist aus dem DE 29705943 U1 bekannt. Dabei schließt die U-förmige Blattbiegefeder die scharnierarmseitige Gelenksachse des äußeren Gelenkhebels mit ihren beiden Schenkeln ein und die freien Enden der Federschenkel sind zum hinteren Ende des Scharnierarmes gerichtet.

Ein weiteres Scharnier ist in der DE 3 616 028 A1 beschrieben, bei dem die Blattbiegefeder mit ihrem mittleren gebegenen Ende auf einem separaten Zapfen gelagert ist.

Aufgabe der Erfindung ist es, ein Scharnier der eingangs erwähnten Art dahingehend zu verbessern, daß die Federkraft vermehrt ausgenützt wird.

Die erfindungsgemäße Aufgabe wird dadurch gelöst, daß die Blattbiegefeder mit dem freien Ende ihres anderen Schenkels auf der scharnierarmseitigen Gelenkachse des äußeren Gelenkhebels gelagert ist.

Eine gute Verankerung der Blattbiegefeder ist dadurch gewährleistet, daß die Blattbiegefeder aus einem gefalteten Federblatt besteht, wobei das Federblatt an der Faltstelle die schamierarmseitige Gelenkachse des äußeren Gelenkhebels umgibt.

Um die Lebensdauer des Scharnieres bzw. des Schließmechanismusses zu verlängern, ist in bevorzugten Ausführungsbeispielen der Erfindung vorgesehen, daß der Schenkel der Blattbiegefeder, der auf den inneren Gelenkhebel drückt, einen am Steuerteil dieses Gelenkhebels anliegenden konkaven Bereich aufweist und daß der Steuerteil des inneren Gelenkhebels von einem aus dem Gelenkhebel herausgebogenen Lappen gebildet wird, der zur Blattbiegefeder hin abgerundet ist, wobei das freie Ende dieses Lappens zur scharnierarmseitigen Gelenkachse des inneren Gelenkhebels gerichtet ist.

Ein guter Halt in der Schließstellung bei schonendem Druck auf den inneren Gelenkhebel wird in einem Ausführungsbeispiel der Erfindung dadurch erzielt, daß das freie Ende des Schenkels der Blattbiegefeder, das auf den inneren Gelenkhebel drückt, zum anderen Schenkel hin abgebogen ist.

Nachfolgend wird ein Ausführungsbeispiel der Erfindung anhand der Figuren der beiliegenden Zeichnungen beschrieben.

Es zeigen:

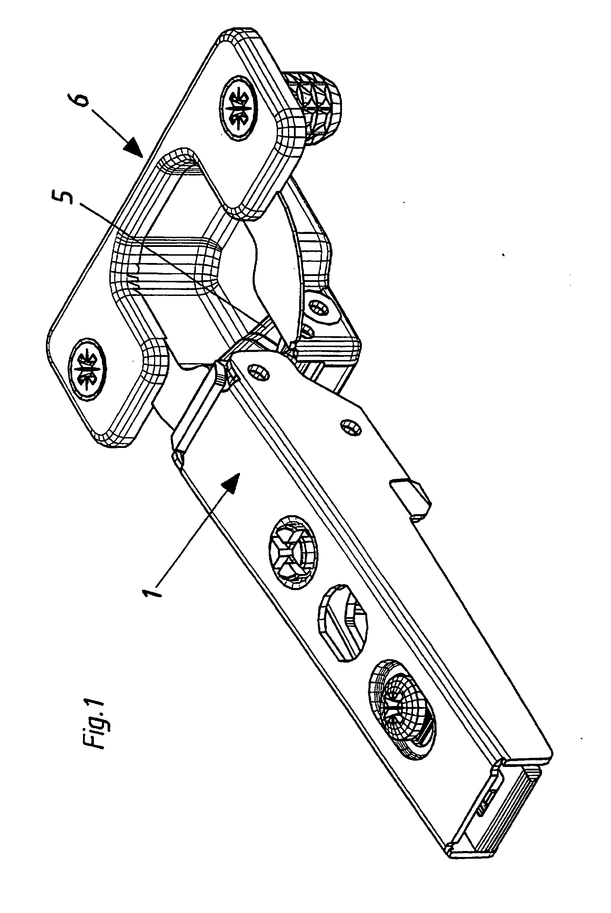

Die Fig. 1 ein Schaubild eines erfindungsgemäßen Schamieres,
die Fig. 2 einen Längsschnitt durch ein erfindungsgemäßes Scharnier in der Schließstellung, die Fig. 3 einen Längsschnitt durch ein erfindungsgemäßes Scharnier in der geöffneten Stellung,
die Fig. 4 einen Schnitt nach der Linie A/A der Fig. 3,
die Fig. 5 einen Längsschnitt durch ein weiteres Ausführungsbeispiel eines erfindungsgemäßen Scharnieres in der Offenstellung und
die Fig. 6 einen Schnitt nach der Linie A/A der Fig. 5.

Das erfindungsgemäße Scharnier weist einen Schamierarm 1 auf, der mittels einer Grundplatte 2 an einer Möbelseitenwand 3 befestigt ist.

Der Scharnierarm 1 ist über einen inneren Gelenkhebel 4 und einen äußeren Gelenkhebel 5 mit einem Schamiertopf 6 verbunden. Der Schamiertopf 6 ist in eine flachseitige Bohrung 7 eines Türflügels 8 eingesetzt.

Der innere Gelenkhebel 4 lagert auf einer schamierarmseitigen Gelenkachse 9 und einer scharniertopfseitigen Gelenkachse 10. Der äußere Gelenkhebel 5 lagert auf einer scharnierarmseitigen Gelenkarmachse 11 und einer scharniertopfseitigen Gelenkachse 12.

Auf der scharnierarmseitigen Gelenkachse 11 des äußeren Gelenkhebels 5 lagert außerdem die Blattbiegefeder 13. Die Blattbiegefeder 13 weist einen Schenkel 14 auf, der sich am Scharnierarm 1 abstützt und einen Schenkel 15, der auf einen Steuerteil am inneren Gelenkhebel 4 drückt.

Die Blattbiegefeder 13 wird von einem gefalteten Metallblatt gebildet, das die Gelenkachse 11 umgibt. Die Gelenksachse 11 befindet sich dabei bei der Faltstelle 23 des Metallblattes. Die beiden freien Enden der Blattbiegefeder 13 weisen zum Scharniertopf 6, während das gebogene Ende 16 der Blattbiegefeder zum hinteren Ende des Scharnierarmes 1 gerichtet ist.

Der Schenkel 15 der Blattbiegefeder 13, der auf den Steuerteil des inneren Gelenkhebels 4 drückt, weist einen konkaven Abschnitt 17 auf, der der Steuerkurve 18 des Steuerteiles des inneren Gelenkhebels 4 angepaßt ist.

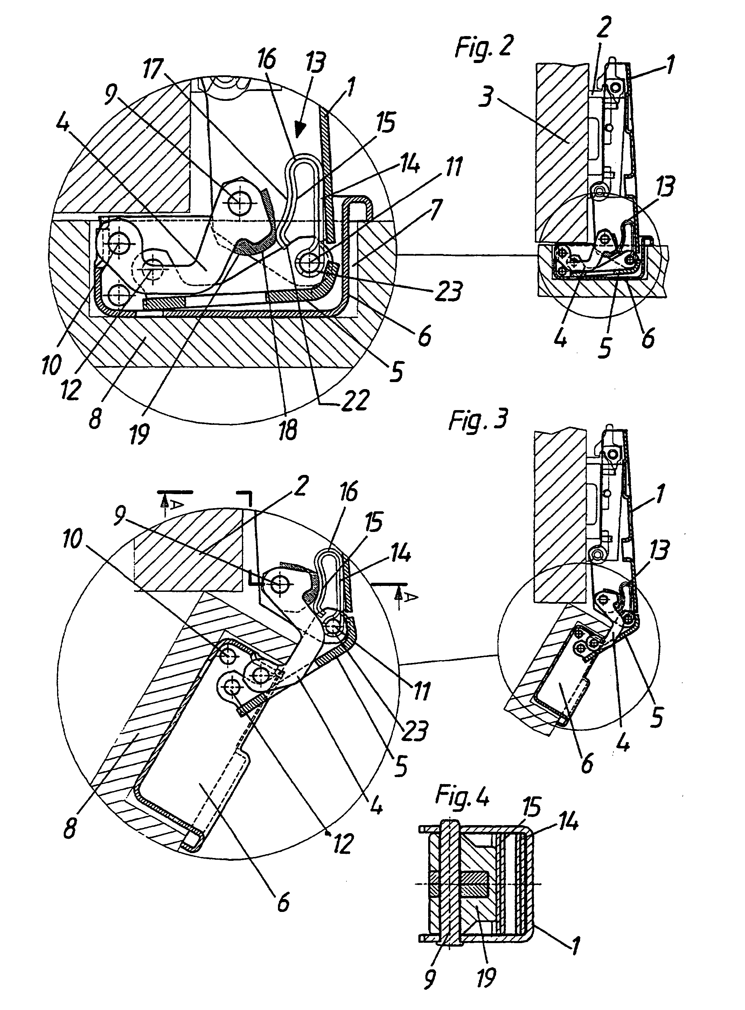

Im Ausführungsbeispiel nach den Figuren 2 bis 4 wird der Steuerteil von einem auf den inneren Gelenkhebel 4 aufgesetzten Block 19 gebildet, der beispielsweise aus Kunststoff gefertigt ist.

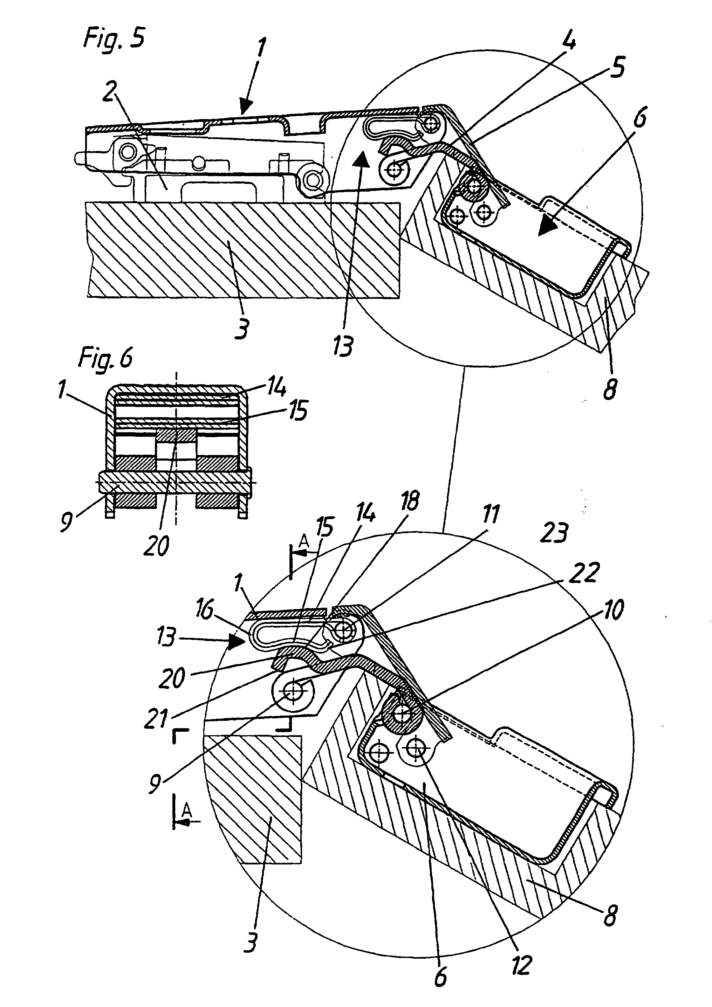

Im Ausführungsbeispiel nach den Figuren 5 bis 6 wird der Steuerteil von einem aus dem inneren Gelenkhebel 4 ausgebogenen Lappen 20 gebildet, der wiederum eine gerundete Steuerfläche 18 aufweist, die am Schenkel 15 der Blattbiegefeder 13 anliegt.

Das freie Ende 21 des abgewinkelten Lappens 20 ist dabei zur Gelenkachse 9 gerichtet.

Der Schenkel 15 der Blattbiegefeder 13, der auf den inneren Gelenkhebel 4 drückt, weist weiters ein zum anderen Schenkel 14 abgewinkeltes freies Ende 22 auf, wodurch sich eine gute Abstützung am Steuerteil des inneren Gelenkhebels 4 in der Schließstellung des Scharnieres ergibt und die Reibung zwischen dem Steuerteil des inneren Gelenkhebels 4 und dem Schenkel 15 der Blattbiegefeder 13 vermindert wird.

## Patentansprüche

1. Scharnier mit einem Scharnierarm (1), der mittels eines äußeren und eines inneren Gelenkhebels (4, 5) mit einem Schamiertopf (6) verbunden ist, indem jeder Gelenkhebel (4, 5) auf einer Gelenkachse (9, 11) des Scharnierarmes (1) und einer Gelenkachse (10, 12) des Scharniertopfes (6) gelagert ist, wobei die beiden Gelenkhebel (4, 5) und die vier Gelenkachsen (9, 10, 11, 12) ein Gelenkviereck bilden und auf der scharnierarmseitigen Gelenkachse (11) des äußeren Gelenkhebels (5) eine U-förmige Blattbiegefeder (13) lagert, die zwei Schenkel (14, 15) mit je einem freien Ende aufweist, die über ein gebogenes Ende (16) miteinander verbunden sind, wobei ein Schenkel (15) auf einen Steuerteil des inneren Gelenkhebels (4) drückt, **dadurch gekennzeichnet, daß** die Blattbiegefeder (13) mit dem freien Ende ihres anderen Schenkels (14) auf der scharnierarmseitigen Gelenkachse (11) des äußeren Gelenkhebels (5) gelagert ist.

2. Scharnier nach Anspruch 1, **dadurch gekennzeichnet, daß** die beiden freien Enden der Blattbiegefeder (13), die in Längsrichtung des Scharnierarmes (1) ausgerichtet ist, zum Scharniertopf (6) weisen.

3. Scharnier nach Anspruch 1 oder 2, **dadurch gekennzeichnet, daß** die Blattbiegefeder (13) aus einem gefalteten Federblatt besteht, wobei das Federblatt an der Faltstelle (23) die schamierarmseitige Gelenkachse (11) des äußeren Gelenkhebels (5) umgibt.

4. Scharnier nach einem der Ansprüche 1 bis 3, **dadurch gekennzeichnet, daß** der Schenkel (15) der Blattbiegefeder (13), der auf den inneren Gelenkhebel (4) drückt, einen am Steuerteil dieses Gelenkhebels anliegenden konkaven Bereich (17) aufweist.

5. Scharnier nach einem der Ansprüche 1 bis 4, **dadurch gekennzeichnet, daß** das freie Ende des Schenkels (15) der Blattbiegefeder (13), das auf den inneren Gelenkhebel (4) drückt, zum anderen Schenkel (14) hin abgebogen ist.

6. Scharnier nach einem der Ansprüche 1 bis 5, **dadurch gekennzeichnet, daß** der Steuerteil des inneren Gelenkhebels (4) von einem aus dem Gelenkhebel (4) herausgebogenen Lappen (20) gebildet wird, der zur Blattbiegefeder (13) hin abgerundet ist, wobei das freie Ende (21) dieses Lappens (20) zur scharnierarmseitigen Gelenkachse (9) des inneren Gelenkhebels (4) gerichtet ist.

## Claims

1. Hinge with a hinge arm (1) which is connected to a hinge casing (6) be means of an outer and an inner hinge link (4, 5) whereby each hinge link (4, 5) is mounted on a hinge axle (9, 11) of the hinge arm (1) and a hinge axle (10, 12) of the hinge casing, whereby the two hinge links (4, 5) and the four hinge axles (9, 10, 11, 12) form a quadrangular linkage and whereby a U-shaped leaf spring (13) is mounted on the hinge axle (11) of the hinge arm (1) for the outer hinge link (5), the U-shaped leaf spring (13) having two legs (14, 15) each having a free end which are connected by means of a bend end (16) whereby one leg (15) presses on a guiding member of the inner hinge link (4), **characterised in that** the leaf spring (13) is mounted on the hinge axle (11) of the hinge arm (1) for the outer hinge link (5) with the free end of the other leg (14).

2. Hinge according to claim 1, **characterised in that** the two free ends of the leaf spring (13), which is aligned in the longitudinal direction of the hinge arm (1), are directed towards the hinge casing (6).

3. Hinge according to claim 1 or 2, **characterised in that** the leaf spring (13) consists of a folded spring leaf whereby the spring leaf encircles the hinge axle (11) of the hinge arm (1) for the outer hinge link (5) with its folded portion (23).

4. Hinge according to one of claims 1 to 3, **characterised in that** the leg (15) of the leaf spring (13) which presses on the inner hinge link (4) is provided with a concave portion (17) that bears on the guiding element of this hinge link.

5. Hinge according to one of claims 1 to 4, **characterised in that** the free end of the leg (15) of the leaf spring (13) which bears on the inner hinge link (4) is bent towards the other leg (14).

6. Hinge according to one of claims 1 to 5, **characterised in that** the guiding element of the inner hinge link (4) is formed by a flap (20) bent out of the hinge link (4) which is rounded towards the leaf spring (13) whereby the free end (21) of the flap (20) is directed to the hinge axle (9) of the hinge arm (1) for the inner hinge link (4).

## Revendications

1. Charnière avec un bras de charnière (1) relié à un boîtier de charnière (6) à l'aide d'un levier articulé externe et interne (4,5), chaque levier articulé (4,5) est logé sur un axe d'articulation (9,11) du bras de charnière (1) et sur un axe d'articulation (10,12) du boîtier de charnière (6), moyennant quoi les deux leviers articulés (4,5) et les quatre axes d'articulation (9,10,11,12) forment un rectangle articulé et, sur l'axe d'articulation (11) du levier articulé externe (5) situé du côté du bras de charnière, se trouve un ressort de flexion à lames (13) comportant deux montants (14,15), avec une extrémité libre, qui peuvent être reliés entre eux par l'intermédiaire d'une extrémité courbée (16), moyennant quoi un montant (15) est appuyé sur une partie d'actionnement du levier articulé interne (4), **caractérisée en ce que** le ressort de flexion à lames (13) est logé avec l'extrémité libre de son autre montant (14) sur l'axe d'articulation (11) du côté du bras de charnière du levier articulé externe (5).

2. Charnière selon la revendication 1, **caractérisé en ce que** les deux extrémités libres du ressort de flexion à lames (13), orienté dans la direction longitudinale du bras de charnière (1), sont orientées vers le boîtier de charnière (6).

3. Charnière selon la revendication 1 ou 2, **caractérisée en ce que** le ressort de flexion à lames (13) est constitué d'une lame de ressort pliée, moyennant quoi la lame de ressort entoure, au niveau de la pliure (23), l'axe d'articulation (11) du côté du bras de charnière du levier articulé (5).

4. Charnière selon l'une des revendications 1 à 3, **caractérisée en ce que** le montant (15) du ressort de flexion à lames (13), qui s'appuie sur le levier articulé externe (4), comporte une zone concave (17) appuyée sur la partie d'actionnement de ce levier articulé.

5. Charnière selon l'une des revendications 1 à 4, **caractérisée en ce que** l'extrémité libre du montant (15) du ressort de flexion à lames (13), qui s'appuie sur le levier articulé interne (4), est plié en direction de l'autre montant (14).

6. Charnière selon l'une des revendications 1 à 5, **caractérisée en ce que** la partie d'actionnement du levier articulé interne (4) est constitué par une des pattes (20) qui est pliée à partir du levier articulé (4) et qui est arrondie du côté du ressort de flexion à lames (13), moyennant quoi l'extrémité libre (21) de cette patte (20) est orientée vers l'axe d'articulation (9) du côté du bras de charnière du levier articulé interne (4).
